# EUROPEAN PATENT SPECIFICATION

(11) **EP 0 685 965 B1**
(45) Date of publication and mention of the grant of the patent: **08.08.2001**
(21) Application number: 95107623.1
(22) Date of filing: 18.05.1995
(51) Int. Cl.: H04N 5/645, H04N 5/64

(54) **Monitor case**
Monitorgehäuse
Boîtier de moniteur

(30) Priority: 30.05.1994 KR 9412086; 30.05.1994 KR 9412087
(43) Date of publication of application: 06.12.1995
(73) Proprietor: SAMSUNG ELECTRONICS CO., LTD., Suwon-City, Kyungki-do (KR)
(72) Inventor: Kwon, Sung-Su, Secho-gu, Seoul (KR); Sim, Jae-Soo, Paldal-Gu, Suwon-City, Kyungki-do (KR); Kim, Young-Tai, Paldal-Gu, Suwon-City, Kyungki-do (KR)
(74) Representative: Tunstall, Christopher Stephen

(56) References cited:
- EP-A- 0 144 258
- EP-A- 0 232 917
- DE-A- 3 405 223
- DE-A- 3 713 939
- DE-A- 3 739 516
- DE-B- 1 221 699
- US-A- 3 251 939
- US-A- 3 359 374
- US-A- 4 006 300
- US-A- 4 063 289
- US-A- 4 411 480
- US-A- 4 572 592
- US-A- 4 635 809
- US-A- 4 853 790
- US-A- 5 155 627
- US-A- 5 363 150
- IBM TECHNICAL DISCLOSURE BULLETIN, vol. 32, no. 9a, 28 February 1990 NEW YORK US, pages 189-191, 'Integrated Touch Screen Monitor'

## Description

The present invention relates to a monitor assembly apparatus, and more particularly, to a monitor assembly apparatus comprising a front case, a cathode ray tube, and a rear case.

Generally, a monitor assembly can be roughly divided into a cathode ray tube, front and rear cases, and a stand for adjusting the screen to a proper viewing position. The assembly means for the monitor components is well known in the art.

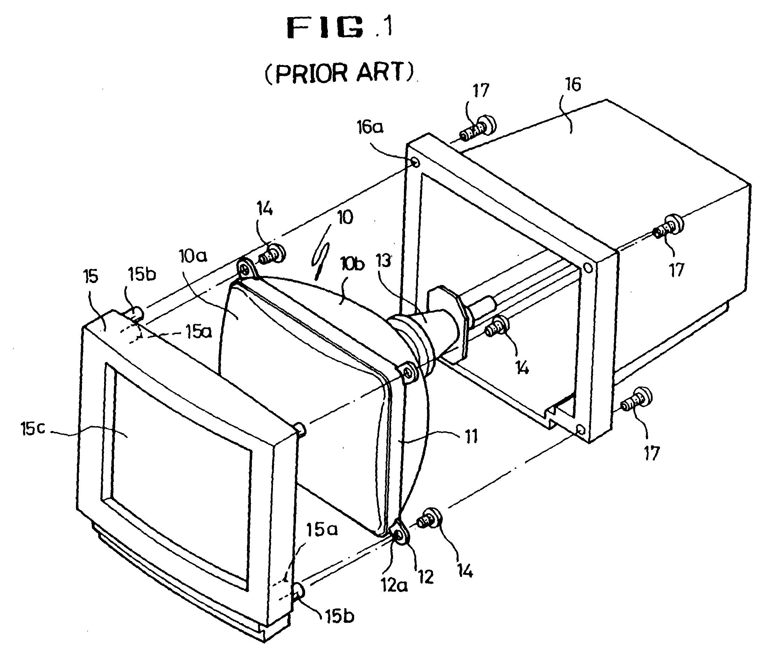

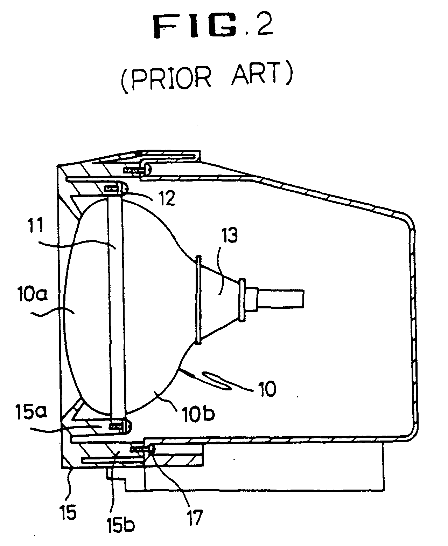

Figs. 1 and 2 illustrate an example of the prior art. Referring to Fig. 1, in a cathode ray tube 10, lugs 12 are fixed to first fastening portions 15a of a front case 15 by screws 14. A rear case 16 is secured to second fastening portions 15b of front case 15 by screws 17 passing through a coupling hole 16a.

In the prior art, the assembly means is slightly different for each manufacturer. However, the assembly mechanism in which the cathode ray tube 10 is directly fixed to the front case 15 and the rear case 16 is directly fixed to the front case 15 is achieved using virtually the same method.

The conventional monitor is assembled in such a manner that the heavy weight of the cathode ray tube acts directly on the front case. However, the front case is manufactured so that a large opening 15c is formed, through which the cathode ray tube can be viewed. For this reason, the ability of the front case to support the cathode ray tube is reduced, and may result in sagging or distortion of the case. Such sagging or distortion creates a gap between the front and rear cases so that foreign matter (e.g., dust) can infiltrate the assembled monitor, which may detrimentally affect its performance. As a result, these problems decrease product reliability.

Further, such a gap distracts from the appearance of the exterior of the monitor.

In the conventional monitor, for the assembly means, screws only are used, and thus many screws must be individually fastened, making for inconvenience in the assembly process. In addition, the second fastening portion in which the screws are used becomes worn. Therefore, once the monitor is assembled and disassembled a few times, the maximum fastening torque to which the screws may be tightened is reduced and the assembly of the front and rear cases may become loose.

As explained above, the conventional assembly means for a monitor decreases product reliability. Further, since the rear case is directly fixed to the front case, their colours should be made the same because different colours would be unsightly. For this reason, there is a tendency toward the manufacture of single-coloured monitors only, causing aesthetic monotony.

European patent application no. EP-A-144258 describes a monitor case including a front case and a rear case. A cathode ray tube is bolted to the front case by means of a bracket arrangement and a rear case is snap-fitted to the back of the front case. A finishing frame is then snap-fitted to the front of the front case.

Therefore, it is an object of the present invention to provide a monitor assembly apparatus in which the weight of the cathode ray tube is dispersed to prevent sagging and eliminate any gap between the front and rear cases.

It is another object of the present invention to provide a monitor assembly apparatus with which the number of screw fasteners is reduced to simplify the assembly process and increase production throughput.

It is still another object of the present invention to provide a monitor assembly apparatus which reduces the wear of the coupling portion of the front case.

Accordingly, the present invention provides a monitor case comprising:
a front case (30) ;
a rear case (50);
an intermediate case (40) interposed between the front and rear cases (30, 50) to support a cathode ray tube (10) ;
first fastening means for securing the cathode ray tube (10); and
second fastening means (53) for securing the rear case (50) ;
**characterised in that:**
the first fastening means pass through the intermediate case and are adapted to fasten the cathode ray tube (10) to the front case (30);
the second fastening means (53) pass through the intermediate case and are adapted to fasten the rear case (50) to the front case (30); and
the intermediate case (40) is adapted to disperse the weight of the cathode ray tube to the front and/or rear cases (30, 50).

Preferably, for aesthetic reasons, said front and rear cases are the same colour, with said intermediary case being a different colour.

For convenience of manufacture, it is preferred that said intermediary case comprises:
a plurality of bosses, each having an insertion hole in which a respective fastening portion formed on said front case is inserted;
a fixing hole and recesses receiving and cooperating with a fixing protrusion and stops formed on said front case, respectively; and
a guide groove receiving and locating said rear case.

Preferably, said second fastening means comprises at least one screw that extends from the rear case to the front case via a protrusion of said intermediary case.

For ease of assembly, it is preferred that the upper portion of said rear case is coupled to said intermediary case by at least one protruding stop, and the second fastening means comprises at least one screw that couples the lower portion of said rear case to said front case.

The present invention will now be described by way of example with reference to the accompanying drawings in which:
Fig. 1 is an exploded perspective view of a conventional monitor;
Fig. 2 is a cross-sectional view (assembled) of the conventional monitor;
Fig. 3 is a perspective view of an intermediary case of a monitor, an important component of the present invention;
Fig. 4 is an exploded perspective view of a first embodiment of the monitor of the present invention;
Fig. 5 is a cross-sectional view (assembled) of the first embodiment of the monitor of the present invention;
Fig. 6 is a cross-sectional view (partially assembled) of a coupling structure for the intermediary case and the rear case of Fig.5;
Fig. 7 is an exploded perspective view of a second embodiment of the monitor of the present invention;
Fig. 8 is a cross-sectional view (assembled) of the second embodiment of the monitor of the present invention;
Fig. 9 is an enlarged view of portion A of Fig. 8; and
Fig. 10 is an illustration of a monitor of the present invention.

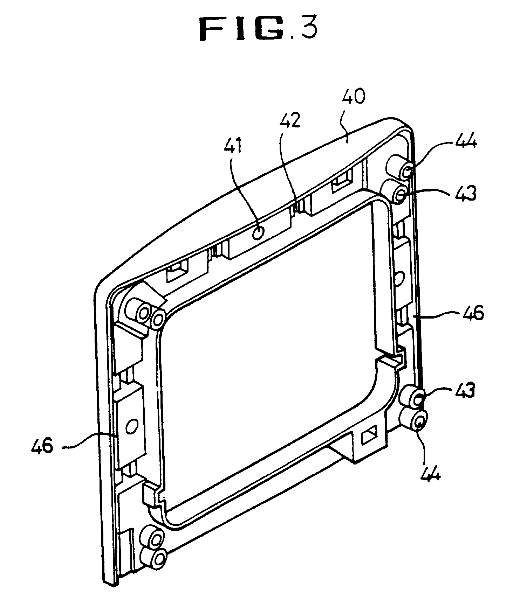

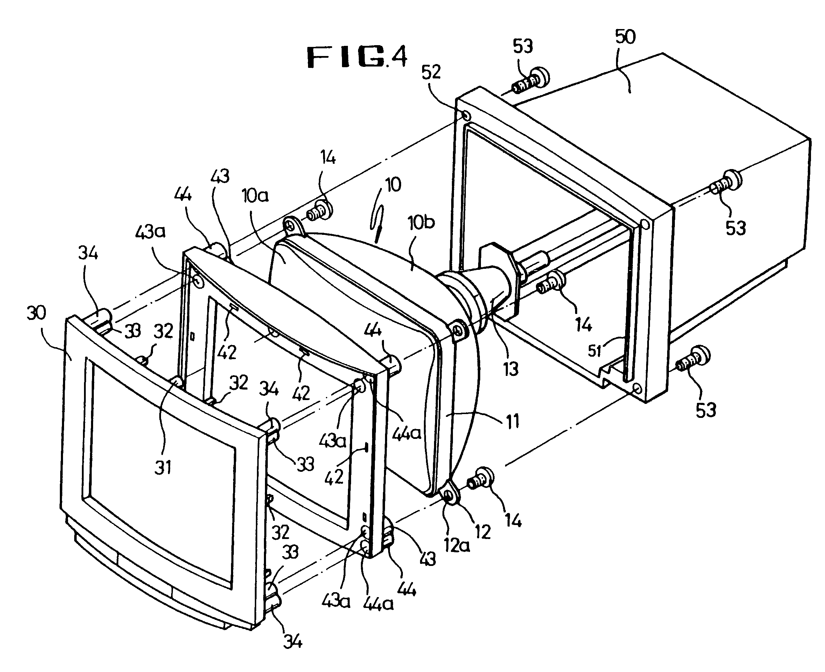

Referring to Figs. 3 and 4, a band 11 is provided on the periphery of a cathode ray tube 10 composed of a panel 10a and funnel 10b. At the four corners of the band 11, lugs 12 in each of which a screw hole 12a for fixing the cathode ray tube 10 is formed are secured, for instance, by welding. A deflection yoke 13 for deflecting an electron beam projected from an electron gun is mounted on the rear portion of the cathode ray tube 10.

On one side of a front case 30 to which the cathode ray tube 10 is fixed by four fastening screws 14, a fixing protrusion 31 is formed. Stops 32 are provided on both sides of the fixing protrusion 31. Stops 32 of the same shape are further provided on both side walls of the front case 30. On a rectangular intermediary case 40 attached to the front case 30 and of the same shape, a fixing hole 41 and recesses 42 are formed to which the fixing protrusion 31 and the stops 32 are fitted. At the four corners of the intermediary case 40, bosses 43 are formed including an insertion hole 43a. First fastening portions 33 of the front case 30 are inserted into the insertion holes 43a. On one side of the bosses, other bosses 44 in which insertion holes 44a are formed are provided. Second fastening portions 34 of front case 30 are inserted into insertion holes 44a.

The cathode ray tube 10 is secured to the first fastening portions 33, with a rear case 50 being secured to the second fastening portions 34. Meanwhile, on one side of the rear case 50 fixed to the second fastening portions 34 by a screw 53, a guide protrusion 51 press-fitted into a guide groove 46 of intermediary case 40 is formed.

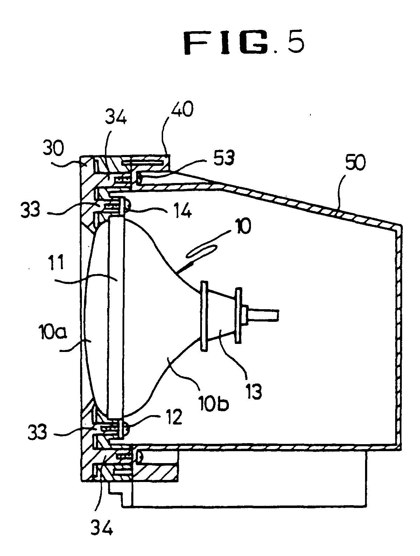

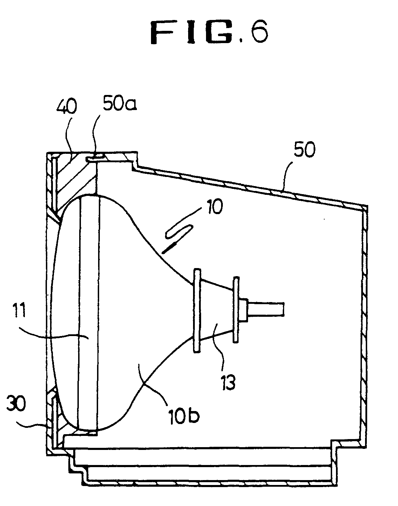

The assembly process of the monitor case constructed as above will be explained below with reference to Figs. 5 and 6. First, the front case 30 and the intermediary case 40 are attached to each other. Specifically, the first fastening portions 33 are fitted into the bosses 43 of the intermediary case 40, and the second fixing portions 34 are fitted into the bosses 44. The fixing protrusion 31 and stops 32 are inserted into the fixing hole 41 and the recesses 42, respectively. Through this process, the front case 30 and intermediary case 40 are coupled.

Thereafter, the cathode ray tube 10 is secured to the first fastening portions 33 of the front case 30 by four fastening screws 14. When insertion depressions 52 of the rear case 50 are lined up with the second fastening portions 34 of the front case 30, the guide protrusion 51 of the rear case 50 is press-fitted into the guide groove 46 of the intermediary case 40, and then four screws 53 are used for coupling.

Here, the intermediary case interposed between the front and rear cases serves to re-enforce the strength of the front and rear cases. In addition, with a variety of colours for the intermediary case, the exterior of the monitor case becomes visually appealing.

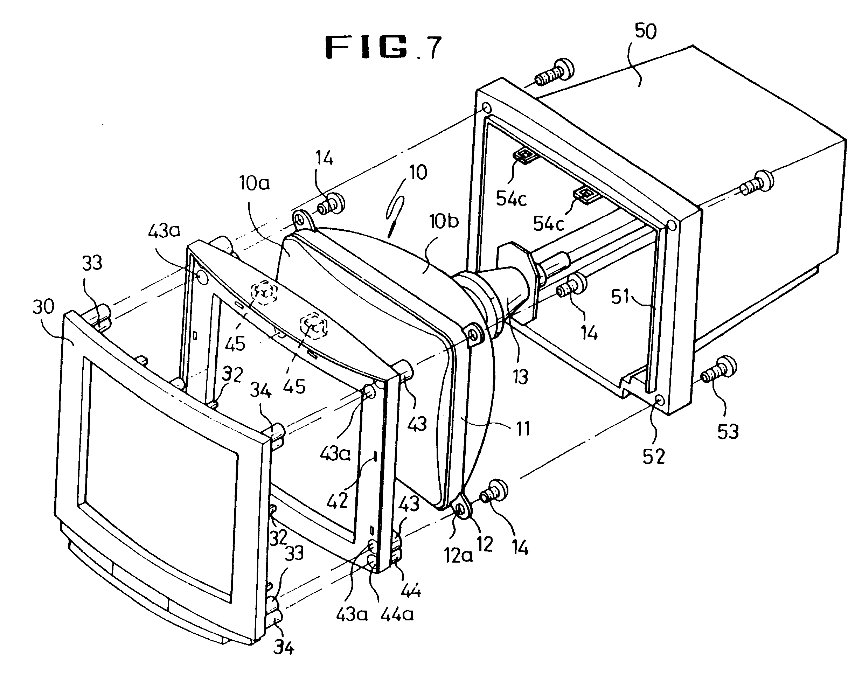

Figs. 7, 8 and 9 show another embodiment of the present invention.

Referring to Fig. 7, the rectangular intermediary case 40 is attached to the front case 30 to which the cathode ray tube 10 is fixed by four fastening screws 14. At the four corners of the intermediary case 40, four bosses 43 are formed, including insertion holes 43a. First fastening portions 33 of the front case 30 are inserted into the insertion holes 43a.

The cathode ray tube 10 is secured by four first fastening portions 33 via the insertion holes 43a of the intermediary case 40. Blocking means 45, which is a pair of stops, is provided on the upper portion of the intermediary case 40. Adjacent to the first fastening portions 33 of the front case 30 which are fitted into the insertion holes 43a of the bosses 43, two second fastening portions 34 are placed.

On the upper portion of the rear case 50, two protruding stops 54c to be coupled to the blocking means 45 of the intermediary case 40 are provided. Two insertion depressions 52 to be coupled with the second fastening portions 34 of the front case 30 are placed on the lower portion of the rear case 50.

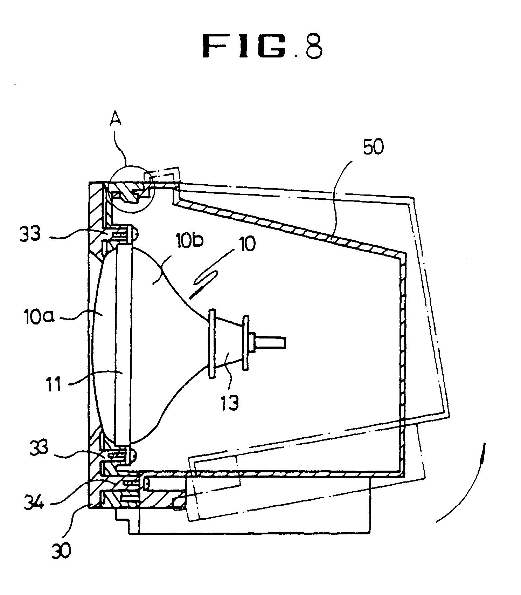

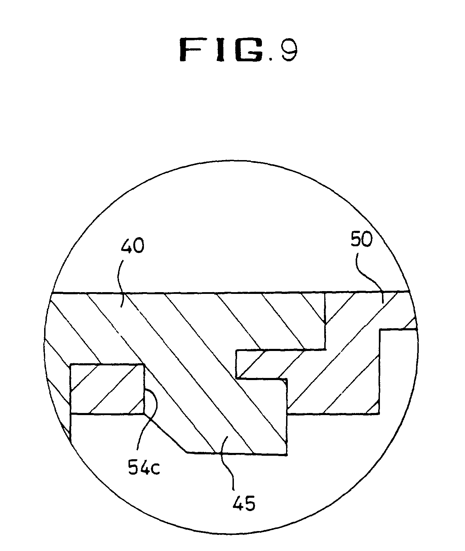

The assembly process of the monitor case constructed as above will be explained below with reference to Figs.8 and 9. Firstly, the first fastening portions 33 are inserted into the insertion holes 43a of the bosses 43 on the intermediary case 40 so that the intermediary case 40 is completely fitted to the front case 30. Thereafter, the cathode ray tube 10 is fixed to the first fastening portions 33 of the front case 30 by four fastening screws 14.

As shown in Fig. 8, the upper portion of the rear case 50 is raised upward to insert stop protrusion 54c of the rear case into the stop 45 of the intermediary case 40. Then, the rear case 50 is lowered. At the same, when the insertion depressions 52 of the rear case 50 are lined up with the second fastening portions 34 of the front case 30, two screws 53 are inserted and tightened. By doing so, the rear case 50 is coupled with the front and intermediary cases 30 and 40.

As described above, with the coupling structure of a monitor case of the present invention, the rear case is easily coupled or detached from the intermediary case attached to the front case, simplifying the assembly process by reducing the number of components and thereby lowering production costs.

Further, the front and rear cases are made in the same colour, and the intermediary case can be made in a different colour and can also be interchangeable, making the exterior of the monitor attractive.

In the present invention, the intermediary case is added to disperse the weight of a cathode ray tube and reinforce the front case for the purpose of preventing the sagging of the case. No gap is created between the respective cases which thus have a stronger structure.

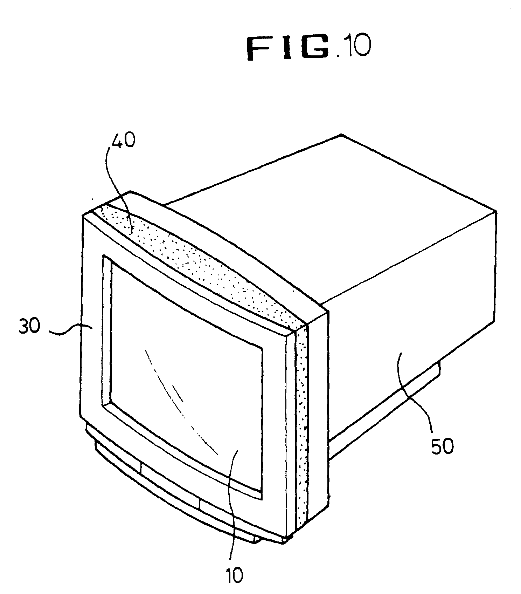

The colour of the intermediary case may be different from that of the front and rear cases as illustrated in Fig.10, making the colour and design of the monitor more attractive. This increases the commercial value of the monitor.

As described in the preferred embodiments, the present invention is characterized in that a monitor assembly uses an intermediary case. It will of course be appreciated that modifications of detail may be made, e.g. to the coupling means of the rear and intermediary cases, without departing from the scope of the invention.

## Claims

1. A monitor case comprising:
a front case (30);
a rear case (50);
an intermediate case (40) interposed between the front and rear cases (30, 50) to support a cathode ray tube (10);
first fastening means for securing the cathode ray tube (10); and
second fastening means (53) for securing the rear case (50);
**characterised in that:**
the first fastening means pass through the intermediate case and are adapted to fasten the cathode ray tube (10) to the front case (30);
the second fastening means (53) pass through the intermediate case and are adapted to fasten the rear case (50) to the front case (30); and
the intermediate case (40) is adapted to disperse the weight of the cathode ray tube.

2. The monitor case as claimed in claim 1 or claim 2, wherein said intermediary case (40) comprises:
a plurality of bosses (43, 44), each having an insertion hole (43a, 44a) in which a respective fastening portion (33, 34) formed on said front case (30) is inserted;
a fixing hole (41) and recesses (42) receiving and cooperating with a fixing protrusion (31) and stops (32) formed on said front case (30), respectively; and a guide groove 46 receiving and locating said rear case (50).

3. The monitor case as claimed in any preceding claim, wherein said second fastening means comprises at least one screw (53) that extends from the rear case (50) to the front case (30) via a protrusion (44) of said intermediary case (40).

4. The monitor case of any preceding claim in which:
the upper portion of said rear case (50) is coupled to said intermediary case (40) by at least one protruding stop (54c), and the second fastening means comprises at least one screw (53) that couples the lower portion of said rear case (50) to said front case (30).

## Patentansprüche

1. Monitorgehäuse, mit:
einem vorderen Gehäuse (30);
einem hinteren Gehäuse (50);
einem Zwischengehäuse (40), das zwischen dem vorderen und dem hinteren Gehäuse (30, 50) angeordnet ist, um eine Kathodenstrahlröhre (10) abstützend zu halten;
ersten Befestigungseinrichtungen, um die Kathodenstrahlröhre (10) zu befestigen; und
zweiten Befestigungseinrichtungen (53), um das hintere Gehäuse (50) zu befestigen;
dadurch gekennzeichnet, daß:
die ersten Befestigungseinrichtungen durch das Zwischengehäuse führen und dazu ausgestaltet sind, um die Kathodenstrahlröhre (10) an dem vorderen Gehäuse (30) zu befestigen;
die zweiten Befestigungseinrichtungen (53) durch das Zwischengehäuse führen und dazu ausgestaltet sind, um das hintere Gehäuse (50) an dem vorderen Gehäuse (30) zu befestigen; und
das Zwischengehäuse (40) dazu ausgestaltet ist, um das Gewicht der Kathodenstrahlröhre zu verteilen.

2. Monitorgehäuse nach Anspruch 1, bei dem das Zwischengehäuse (40) aufweist:
eine Vielzahl von Sockeln (43, 44), die jeweils ein Einsetzloch (43a, 44a) haben, in das ein zugehöriger Befestigungsbereich (33, 34), der an dem vorderen Gehäuse (30) ausgebildet ist, eingesetzt ist;
ein Fixierloch (41) und Aussparungen (42), die einen Fixiervorsprung (31) bzw. Anschläge (32) aufnehmen und damit zusammenwirken, die an dem vorderen Gehäuse (30) ausgebildet sind; und
eine Führungsnut (46), die das hintere Gehäuse (50) aufnimmt und lokalisiert.

3. Monitorgehäuse nach einem der vorhergehenden Ansprüche, bei dem die zweiten Befestigungseinrichtungen zumindest eine Schraube (53) beinhalten, die sich von dem hinteren Gehäuse (50) zu dem vorderen Gehäuse (30) über eine Sockel (44) des Zwischengehäuses (40) erstreckt.

4. Monitorgehäuse nach einem der vorhergehenden Ansprüche, bei dem:
der obere Bereich des hinteren Gehäuses (50) mit dem Zwischengehäuse (40) durch zumindest einen vorstehenden Anschlag (54c) gekoppelt ist, und die zweiten Befestigungseinrichtungen zumindest eine Schraube (53) beinhalten, durch die der untere Bereich des hinteren Gehäuses (50) mit dem vorderen Gehäuse (30) gekoppelt ist.

## Revendications

1. Corps de moniteur comprenant :
un corps avant (30),
un corps arrière (50),
un corps intermédiaire (40) interposé entre les corps avant et arrière (30, 50) pour supporter un tube à rayons cathodiques (10),
des premiers moyens de blocage pour immobiliser le tube à rayons cathodiques (10), et
des deuxièmes moyens de blocage (53) pour immobiliser le corps arrière (50),
caractérisé en ce que :
les premiers moyens de blocage passent au travers du corps intermédiaire et sont adaptés pour bloquer le tube à rayons cathodiques (10) sur le corps avant (30),
les deuxièmes moyens de blocage (53) passent au travers du corps intermédiaire et sont adaptés pour bloquer le corps arrière (50) sur le corps avant (30), et
le corps intermédiaire (40) est adapté pour répartir le poids du tube à rayons cathodiques.

2. Corps de moniteur selon la revendication 1, dans lequel ledit corps intermédiaire (40) comprend :
une pluralité de bossages (43, 44), ayant chacun un orifice d'insertion (43a, 44a) dans lequel une partie de blocage respective (33, 34) formée sur ledit corps avant (30) est insérée,
un orifice de fixation (41) et des cavités (42) recevant et coopérant avec une saillie de fixation (31) et des butées (32) formées sur ledit corps avant (30), respectivement, et
une gorge de guidage (46) recevant et positionnant ledit corps arrière (50).

3. Corps de moniteur selon l'une quelconque des revendications précédentes, dans lequel lesdits deuxièmes moyens de blocage comprennent au moins une vis (53) qui s'étend depuis le corps arrière (50) jusqu'au corps avant (30) via une saillie (44) dudit corps intermédiaire (40).

4. Corps de moniteur selon l'une quelconque des revendications précédentes, dans lequel la partie supérieure dudit corps arrière (50) est couplée audit corps intermédiaire (40) par au moins une butée en saillie (54c), et les deuxièmes moyens de blocage comprennent au moins une vis (53) qui couple la partie inférieure dudit corps arrière (50) audit corps avant (30).
